# EUROPEAN PATENT APPLICATION

(11) **EP 3 174 052 A1**
(43) Date of publication of application: **31.05.2017**
(21) Application number: 14881955.0
(22) Date of filing: 20.10.2014
(51) Int. Cl.: G10L 21/06, G10L 21/10, G10L 15/22

(54) **METHOD AND DEVICE FOR REALIZING VOICE MESSAGE VISUALIZATION SERVICE**

(30) Priority: 22.07.2014 CN 201410351478
(71) Applicant: ZTE Corporation, Shenzhen, Guangdong 518057 (CN)
(72) Inventor: LI, Chao, Shenzhen Guangdong 518057 (CN); HE, Xuyi, Shenzhen Guangdong 518057 (CN)
(74) Representative: Savi, Massimiliano
(86) International application number: PCT/CN2014/088985
(87) International publication number: WO 2015/117373

(57) **Abstract**

A method and device for realizing a voice message visualization service are disclosed. The device at least includes: an information receiving module (401), receiving an original message and a portrait picture sent by a message sender or locally stored, herein, the original message is a text message or a voice message; and a dynamic video generation module (402), extracting facial features from the portrait picture, generating facial expressions, and synthesizing the facial expressions and the original message into dynamic video information, herein, the generated facial expressions correspond to contents of the original message; sending the dynamic video information to a message receiver and displaying the dynamic video information on a terminal of the message receiver. Resources are utilized to a relatively greater extent in the technical scheme, so that a user sends information more conveniently and more interestingly.

## Description

### Technical Field

The present invention relates to the technical field of realizing a voice message visualization service, and specifically to an integrated and unified voice message service.

### Background

Today with the rapid development of the information communication, people may be usually troubled with the following cases when using the phone to communicate: there is no answer for a long time of dialing because the opposite-side person is out; an important call is missed due to going out for handling affairs; and it is inconvenient to answer the call during an important job and conference. Therefore, a voice message services are generated. The voice message service may transfer calls that cannot be timely answered by the user to voice messages and let a caller leave messages; and prompt a called party at sometime in the future so that the called party listens to the messages conveniently.

This is the initial development phase of the voice message service. However, with the gradual maturity and commercial use of the 3G technology and the next generation network technology, service applications based on the 3G network also get increasingly rich. The appearance of smartphones further enriches interaction means between the user and the voice message service, and the most important feature is that the user may upload various data including location information and pictures and the like through the smartphones.

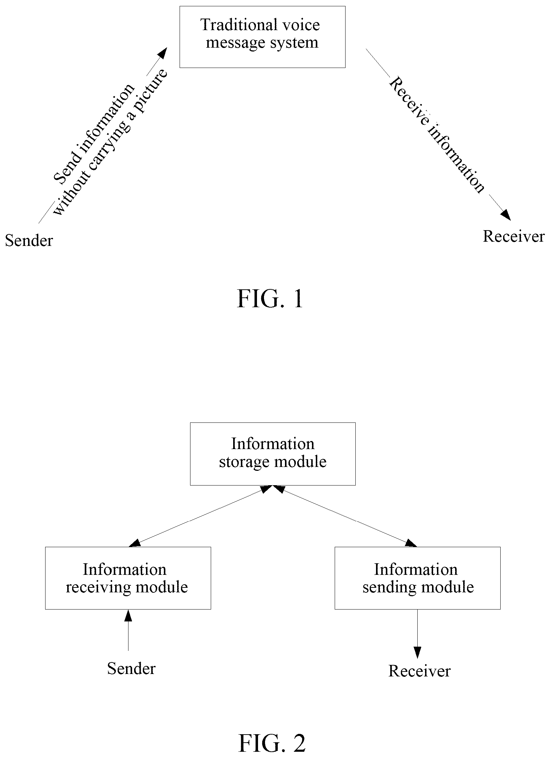

As shown in FIG. 1, when the user uses the current voice message system, the information that the user sends is the information that the user receives. The basic architecture of the more popular voice message system nowadays is as shown in FIG. 2, and core component modules include an information receiving module, an information storage module and an information sending module. The basic working principle is as follows: the user (a voice message sender) sending a message to the voice message system, the information receiving module receiving the message and calling the information storage module for storage, and then the information sending module sending the voice message to a voice message receiver.

### Summary

The technical problem required to be solved in the present invention is to provide a method and device for realizing voice message visualization, to achieve that a user sends video information generated based on his/her own facial features.

In order to solve the above technical problem, the following technical scheme is adopted.

A device for realizing voice message visualization includes an information receiving module and a dynamic video generation module, herein:
the information receiving module is arranged to: receive an original message and a portrait picture sent by a message sender or locally stored, herein, the original message is a text message or a voice message; and
the dynamic video generation module is arranged to: extract facial features from the portrait picture, generate facial expressions, and synthesize the facial expressions and the original message into dynamic video information, herein, the generated facial expressions correspond to contents of the original message; send the dynamic video information to a message receiver, and display the dynamic video information on a terminal of the message receiver.

Alternatively, the dynamic video generation module includes a facial feature extraction submodule, a facial expression generation submodule and an information conversion submodule, herein:
the facial feature extraction submodule is arranged to: extract the facial features from the portrait picture;
the facial expression generation submodule is arranged to: generate the facial expressions according to the extracted facial features; and
the information conversion submodule is arranged to: split the text message or the voice message into single words according to a word library, analyze a context and emotions in accordance with the words, select corresponding facial expression pictures from the generated facial expressions according to the context and emotions, and synthesize the facial expression pictures and the text message or the voice message into the dynamic video information.

Alternatively, the device is arranged at a voice message system side.

Alternatively, the device further includes an information storage module and an information sending module, herein:
the information storage module is arranged to: store the original message and the portrait picture sent by the message sender, and store the dynamic video information generated by the dynamic video generation module and corresponding receiver information; and
the information sending module is arranged to: send the dynamic video information stored by the information storage module to the message receiver.

Alternatively, the message receiver is a mobile terminal user or an Internet Protocol Television (IPTV) user.

A method for realizing voice message visualization includes:
receiving an original message and a portrait picture sent by a message sender or locally stored, herein, the original message is a text message or a voice message;
extracting facial features from the portrait picture, generating facial expressions, and synthesizing the generated facial expressions and the original message into dynamic video information, herein, the generated facial expressions correspond to contents of the original message;
sending the dynamic video information to a message receiver, and displaying the dynamic video information on a terminal of the message receiver.

Alternatively, the step of synthesizing the generated facial expressions and the original message into dynamic video information includes:
splitting the text message or the voice message into single words according to a word library, analyzing a context and emotions in accordance with the words, selecting corresponding facial expression pictures from the generated facial expressions according to the context and emotions, and synthesizing the facial expression pictures and the text message or the voice message into the dynamic video information.

Alternatively, the method further includes:
sending the synthesized dynamic video information to the message receiver.

Alternatively, the message receiver is a mobile terminal user or an Internet Protocol Television (IPTV) user.

In the above technical scheme, the text message and the voice message are converted into the video information generated based on the user's facial features, and resources are utilized to a relatively greater extent, so that the user sends the information more conveniently and more interestingly, which improves the market competitiveness and has evident economic benefits and social benefits.

### Brief Description of Drawings

FIG. 1 is a schematic diagram of the principle of the current voice message system.
FIG. 2 is a schematic diagram of the architecture of the current voice message system.
FIG. 3 is a schematic diagram of the principle of the improved voice message system according to an embodiment of the present invention.
FIG. 4 is a schematic diagram of the structure of the improved voice message system according to an embodiment of the present invention.
FIG. 5 is a flow diagram of a user sending a message in an embodiment of the present invention.
FIG. 6 is a flow diagram of a user receiving a message in an embodiment of the present invention.
FIG. 7 is a flow diagram of an application scenario 1 in the present invention.
FIG. 8 is a flow diagram of converting a voice message into a dynamic video in the embodiment.
FIG. 9 is a flow diagram of an application scenario 2 in the present invention.
FIG. 10 is a flow diagram of converting a text message into a dynamic video in the embodiment.
FIG. 11 is a flow diagram of an application scenario 3 in the present invention.

### Detailed Description

The technical scheme of the present invention will be further described in detail in combination with the accompanying drawings below. It should be noted that the embodiments in the present invention and the characteristics in the embodiments may be arbitrarily combined with each other in the case of no conflict.

### Embodiment 1

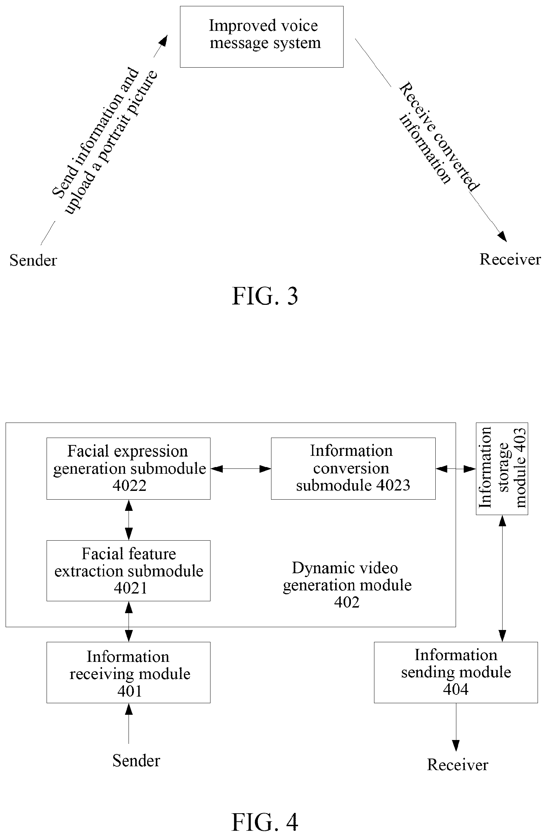

Since a message sender may only send information in the traditional voice message system shown in FIG. 1, the inventor of the present invention considers that, if a voice message system as shown in FIG. 3 is arranged, a user may upload his/her own picture while sending the information, so that a system generates dynamic video information generated based on his/her own facial features and then sends the dynamic video information to a message receiver. Therefore, various data will be utilized to a greater extent, which improves the user's satisfaction and the market competitiveness.

Based on the above idea, the embodiment provides a device for realizing voice message visualization, which at least includes an information receiving module 401 and a dynamic video generation module 402 as shown in FIG. 4.

Herein, the information receiving module 401 is arranged to: receive an original message and a portrait picture sent by a message sender, and the original message is a text message or a voice message in the embodiment.

The dynamic video generation module 402 is arranged to: extract facial features from the received portrait picture, generate facial expressions, and synthesize the generated facial expressions and the received original message into dynamic video information, herein, the generated facial expressions correspond to contents of the original message; display the dynamic video information on a terminal of a message receiver or send the dynamic video information to the message receiver.

Specifically, the dynamic video generation module 402 includes a facial feature extraction submodule 4021, a facial expression generation submodule 4022 and an information conversion submodule 4023.

Herein, the information receiving module 401 is connected to an information storage module 403 and the facial feature extraction submodule 4021 mentioned below. The information receiving module 401 is arranged to: receive the original message (i.e. the text message or the voice message) and the portrait picture sent by the user (the message sender). After a message upload request is received, firstly the facial feature extraction submodule 4021 is called to conduct an information conversion processing flow, and finally a result is returned to the message sender.

The facial feature extraction submodule 4021 is connected to the information receiving module 401 and the facial expression generation submodule 4022. The facial feature extraction submodule 4021 is arranged to: extract the facial features from the picture uploaded by the user, and then call the facial expression generation submodule 4022.

The facial expression generation submodule 4022 is connected to the facial feature extraction submodule 4021 and the information conversion submodule 4023. The facial expression generation submodule 4022 is arranged to: generate the facial expressions according to the facial features, and then call the information conversion submodule 4023.

The information conversion submodule 4023 is connected to the facial expression generation submodule 4022, and the information conversion submodule 4023 is arranged to: synthesize the original message of the sender and the facial expressions into new dynamic video information. The information conversion submodule splits the text message or the voice message into single words according to a word library, analyzes a context and emotions in accordance with the words, selects corresponding facial expression pictures from the generated facial expressions according to the context and emotions, and synthesizes the facial expression pictures and the text message or the voice message into a dynamic video. That is to say, the dynamic video generated by the information conversion submodule 4023 may reflect contents of the original text message or voice message, so that the user may also acquire the message contents through a dynamic picture.

It should be noted that the device in the embodiment may be arranged at a voice message system side, at this point, the device may also include the information storage module 403 and an information sending module 404, and the information storage module 403 is connected to the information receiving module 401, the information conversion submodule 4023 and the information sending module 404 (the architecture of the whole device is as shown in FIG. 4 at this point). The information storage module 403 is mainly responsible for saving the generated dynamic video information and corresponding receiver information, so that the information sending module queries the user message. Preferably, the information storage module 403 is further arranged to store the original message and the portrait picture sent by the message sender. At this point, the information sending module 404 sends the dynamic video information stored by the information storage module 403 to the corresponding receiver.

Specifically, the information sending module 404 calls the information storage module 403 to search out the user's voice message (i.e. the dynamic video information in the embodiment) after detecting that the user (i.e. the receiver) is powered on, and then sends the message.

The information transmission in the device of the embodiment will be described in detail by taking a flow of the user sending information and a flow of the user receiving information as an example below.

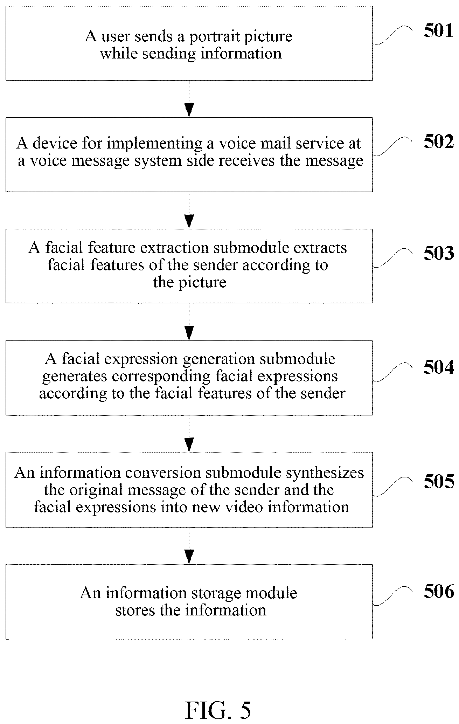

As shown in FIG. 5, it is a flow of the user sending information in the device provided in the embodiment, and the following steps are included.

In step 501, the user sends a portrait picture while sending information.

In the step, the user may also send a portrait picture within a set time after sending an original message.

In step 502, a device for realizing voice message visualization at a voice message system side receives the message.

In step 503, a facial feature extraction submodule extracts facial features of the sender according to the picture.

In step 504, a facial expression generation submodule generates corresponding facial expressions according to the facial features of the sender.

In step 505, an information conversion submodule synthesizes the original message of the sender and the facial expressions into new video information.

Herein, the generated facial expressions correspond to contents of the original message. That is, the generated dynamic video may reflect contents of the original text message or voice message, so that the user may also acquire the message contents through a dynamic picture.

In step 506, an information storage module stores the information.

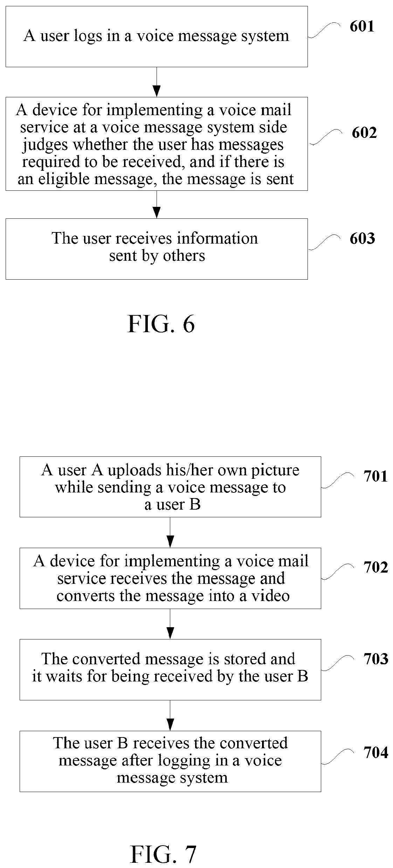

As shown in FIG. 6, it is a flow of the user receiving information in the device provided in the embodiment, and the following steps are included.

In step 601, a user logs in a voice message system.

In step 602, a device for realizing voice message visualization judges whether the user has messages required to be received, and if there is an eligible message, the message is sent.

In step 603, the user receives information sent by others.

The working process of the above voice message system will be described through specific application scenarios below.

### Application scenario 1

A voice message may be converted into a video generated based on the user's facial features through the device of the embodiment and then sent to the user (receiver), the process is as shown in FIG. 7, and the following operations are included.

In step 701, a user A uploads his/her own picture while sending a voice message to a user B.

In step 702, a device for realizing voice message visualization receives the message and converts the message into a video.

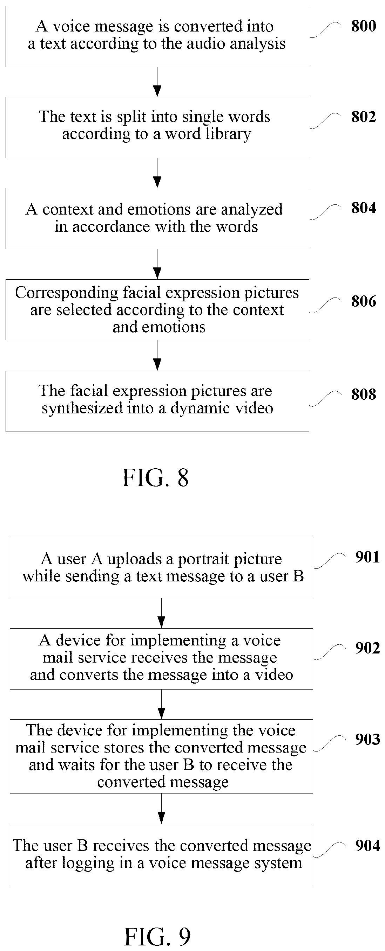

That is, the voice message and the portrait picture are synthesized into dynamic video information, the specific process is as shown in FIG. 8, and the following operations are included.

In step 800, the voice message is converted into a text according to the audio analysis.

In step 802, the text is split into single words according to a word library.

In step 804, the context and emotions are analyzed in accordance with the words.

In step 806, corresponding facial expression pictures are selected according to the context and emotions.

Herein, the facial expression pictures are generated by extracting facial features from the portrait picture.

In step 808, the facial expression pictures are synthesized into a dynamic video.

In step 703, the converted message is stored and it waits for being received by the user B.

In step 704, the user B receives the converted message after logging in a voice message system.

In the application scenario, the user B is a disabled person who cannot hear voices but can read lip languages, thus contents of the original message namely contents of the voice message can be acquired through the synthesized dynamic video information.

### Application scenario 2

A text message may be converted into a video generated based on the user's facial features through the device of the embodiment and then sent to the user (receiver), the process is as shown in FIG. 9, and the following operations are included.

In step 901, a user A uploads a portrait picture while sending a text message to a user B.

In step 902, a device for realizing voice message visualization receives the message and converts the message into a video.

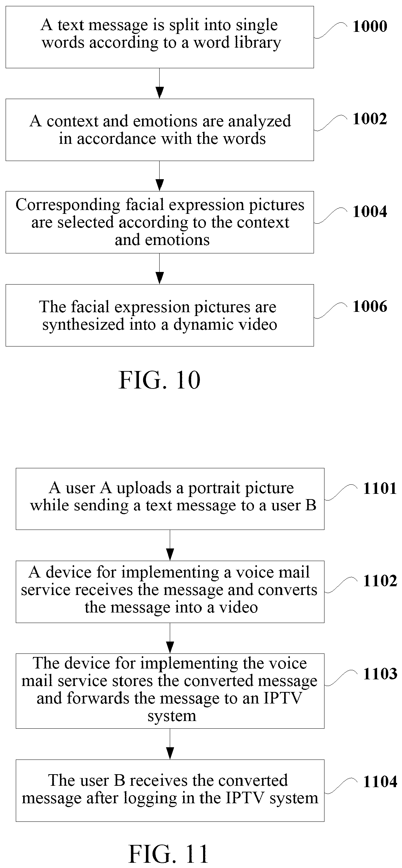

That is, the text message and the portrait picture are synthesized into dynamic video information, and the following operations are specifically included as shown in FIG. 10.

In step 1000, the text message is split into single words according to a word library.

In step 1002, the context and emotions are analyzed in accordance with the words.

In step 1004, corresponding facial expression pictures are selected according to the context and emotions.

Herein, the facial expression pictures are generated by extracting facial features from the portrait picture.

In step 1006, the facial expression pictures are synthesized into a dynamic video.

In step 903, the device for realizing the voice message visualization stores the converted message and waits for the user B to receive the converted message.

In step 904, the user B receives the converted message after logging in a voice message system.

### Application scenario 3

The device in the embodiment and an IPTV system have an interface intercommunication message, thus the device in the embodiment and the IPTV system may be combined, so that an IPTV user receives the converted information on the TV, the specific implementation process is as shown in FIG. 11, and the following operations are included.

In step 1101, a user A uploads a portrait picture while sending a text message to a user B.

In step 1102, a device for realizing voice message visualization receives the message and converts the message into a video.

That is, the text message and the portrait picture are synthesized into dynamic video information, and the specific operations are as mentioned above.

In step 1103, a device for realizing a voice mail service stores the converted message and forwards the message to an IPTV system.

In step 1104, the user B receives the converted message after logging in the IPTV system.

### Embodiment 2

The embodiment provides a method for realizing voice message visualization, which may be implemented based on the device in the above embodiment 1. The method includes the following operations:
receiving an original message and a portrait picture sent by a message sender, herein, the original message is a text message or a voice message;
extracting facial features from the received portrait picture, generating facial expressions, and synthesizing the generated facial expressions and the received original message into dynamic video information, herein, the generated facial expressions correspond to contents of the original message;
displaying the dynamic video information on a terminal of a message receiver or sending the dynamic video information to the message receiver.

Based on the above method, the synthesized dynamic video information and the corresponding receiver information may also be stored, so that the corresponding dynamic video information is searched when the message is sent to the user.

Certainly, the original message and the portrait picture sent by the message sender may also be stored.

Finally, the synthesized dynamic video information is sent to the corresponding receiver.

Specifically, in the embodiment, the process of extracting facial features from the portrait picture, generating facial expressions, and synthesizing the generated facial expressions and the original message into dynamic video information is as follows:
firstly, extracting the facial features from the received portrait picture;
secondly, generating the facial expressions according to the extracted facial features; and
finally, splitting the original message (such as the text message or the voice message) into single words according to a word library, analyzing a context and emotions in accordance with the words, selecting corresponding facial expression pictures from the generated facial expressions according to the context and emotions, and synthesizing the facial expression pictures and the text message or the voice message into a dynamic video.

Moreover, it should be noted that the receiver related in the above method may be a mobile terminal user or an IPTV user.

The specific implementation of the above method may also refer to the corresponding contents of the above embodiment 1, which will not be repeated here.

The ordinary person skilled in the art can understand that all or part of the steps in the above method may be completed by a program instructing related hardware, and the program may be stored in a computer readable memory medium, such as a read-only memory, a magnetic disk or an optical disk and so on. Alternatively, all or part of the steps of the above embodiments may also be implemented by using one or multiple integrated circuits. Correspondingly, each module/unit in the above embodiments may be implemented in the form of hardware or be implemented in the form of a software function module. The present invention is not limited to any combination of hardware and software in a specific form.

The above description is only the preferred embodiments of the present invention, which is not used to limit the protection scope of the present invention. All the modifications, equivalent substitutions, and improvements, etc. made within the spirit and principle of the present invention shall be contained within the protection scope of the present invention.

### Industrial Applicability

In the above technical scheme, a text message and a voice message are converted into video information generated based on the user's facial features, resources are utilized to a relatively greater extent, so that a user sends information more conveniently and more interestingly, and the market competitiveness is improved, thus it has very strong industrial applicability.

## Claims

1. A device for realizing voice message visualization, comprising an information receiving module and a dynamic video generation module, wherein:
the information receiving module is arranged to: receive an original message and a portrait picture sent by a message sender or locally stored, wherein the original message is a text message or a voice message; and
the dynamic video generation module is arranged to: extract facial features from the portrait picture, generate facial expressions, and synthesize the facial expressions and the original message into dynamic video information, wherein the generated facial expressions correspond to contents of the original message; send the dynamic video information to a message receiver, and display the dynamic video information on a terminal of the message receiver.

2. The realization device according to claim 1, wherein the dynamic video generation module comprises a facial feature extraction submodule, a facial expression generation submodule and an information conversion submodule, wherein:
the facial feature extraction submodule is arranged to: extract the facial features from the portrait picture;
the facial expression generation submodule is arranged to: generate the facial expressions according to the extracted facial features; and
the information conversion submodule is arranged to: split the text message or the voice message into single words according to a word library, analyze a context and emotions in accordance with the words, select corresponding facial expression pictures from the generated facial expressions according to the context and emotions, and synthesize the facial expression pictures and the text message or the voice message into the dynamic video information.

3. The realization device according to claim 1 or 2, wherein the device is arranged at a voice message system side.

4. The realization device according to claim 3, further comprising an information storage module and an information sending module, wherein:
the information storage module is arranged to: store the original message and the portrait picture sent by the message sender, and store the dynamic video information generated by the dynamic video generation module and corresponding receiver information; and
the information sending module is arranged to: send the dynamic video information stored by the information storage module to the message receiver.

5. The realization device according to claim 4, wherein the message receiver is a mobile terminal user or an internet protocol television, IPTV, user.

6. A method for realizing voice message visualization, comprising:
receiving an original message and a portrait picture sent by a message sender or locally stored, wherein the original message is a text message or a voice message;
extracting facial features from the portrait picture, generating facial expressions, and synthesizing the generated facial expressions and the original message into dynamic video information, wherein the generated facial expressions correspond to contents of the original message;
sending the dynamic video information to a message receiver, and displaying the dynamic video information on a terminal of the message receiver.

7. The realization method according to claim 6, wherein the step of synthesizing the generated facial expressions and the original message into dynamic video information comprises:
splitting the text message or the voice message into single words according to a word library, analyzing a context and emotions in accordance with the words, selecting corresponding facial expression pictures from the generated facial expressions according to the context and emotions, and synthesizing the facial expression pictures and the text message or the voice message into the dynamic video information.

8. The realization method according to claim 6 or 7, further comprising:
sending the synthesized dynamic video information to the message receiver.

9. The realization method according to claim 8, wherein the message receiver is a mobile terminal user or an internet protocol television, IPTV, user.

10. A computer program, comprising a program instruction, wherein when the program instruction is executed by a device for realizing voice message visualization, the device for realizing the voice message visualization may execute the method for realizing the voice message visualization according to any one of claims 6-9.

11. A carrier carrying the computer program according to claim 10.
